# EUROPÄISCHE PATENTANMELDUNG

(11) **EP 2 990 249 A2**
(43) Veröffentlichungstag der Anmeldung: **02.03.2016**
(21) Anmeldenummer: 15001109.6
(22) Anmeldetag: 16.04.2015
(51) Int. Cl.: B60K 6/48, B60K 25/00, B60K 25/02, B60K 25/06

(54) **HYBRIDANTRIEBSANORDNUNG FÜR EIN FAHRZEUG**

(30) Priorität: 20.08.2014 DE 102014012397
(71) Anmelder: MAN Truck & Bus AG, 80995 München (DE)
(72) Erfinder: Burkhardt, Wolfgang, 91522 Ansbach (DE); Müller, Bernd, 81375 München (DE); Norimoghaddam, Kianush, 82223 Eichenau (DE)

(57) **Zusammenfassung**

Die Erfindung betrifft eine Hybridantriebsanordnung (1) für ein Fahrzeug, insbesondere für ein Nutzfahrzeug, umfassend eine Verbrennungskraftmaschine (3), aufweisend einen Nebenabtrieb (20) zum Antrieb eines Nebenaggregats; und eine sowohl motorisch als generatorisch betreibbare elektrische Maschine (4), die mit dem Nebenabtrieb (20) bewegungskoppelbar und/oder bewegungsgekoppelt ist.

## Beschreibung

Die Erfindung betrifft eine Hybridantriebsanordnung für ein Fahrzeug, insbesondere für ein Nutzfahrzeug, umfassend eine Verbrennungskraftmaschine und eine sowohl motorisch als auch generatorisch betreibbare elektrische Maschine.

Hybridfahrzeuge weisen eine Kombination von einem Verbrennungs- und einem Elektromotor auf. Aus dem Stand der Technik sind insbesondere Antriebsstrangmodule von Hybridfahrzeugen bekannt, bei denen eine motorisch als auch generatorisch betreibbare elektrische Maschine in Form eines elektrischen Kurbelwellen-Startergenerators (KSG) zwischen Motor und Getriebe koaxial zur Kurbelwelle vorgesehen ist. Hierbei steht der KSG in Wirkverbindung mit der Kurbelwelle, in dem der KSG-Rotor mit einem auf der Kurbelwelle angeordneten Schwungrad drehfest verbunden ist.

Nachteilig an einer solchen Anordnung ist, dass bei herkömmlichen rein verbrennungsmotorisch angetriebenen Antriebsträngen, die nachträglich zusätzlich um eine elektrische Maschine zur Ausbildung eines Hybridantriebs erweitert werden sollen, die Motor-Getriebe-Struktur und deren Lagerung im Fahrzeug geändert werden müssen. Dies bedingt vergleichsweise hohe Entwicklungsaufwände. Ferner verlängert sich die Motor-Getriebe-Einheit, was bauraumbedingt zu weiteren Problemen führen kann.

Es ist somit eine Aufgabe der Erfindung, eine verbesserte Hybridantriebsanordnung bereitzustellen, mit der Nachteile herkömmlicher Hybridantriebsanordnungen vermieden werden können. Der Erfindung liegt insbesondere die Aufgabe zugrunde, eine vereinfachte Anbaumöglichkeit für eine elektrische Maschine an eine Verbrennungskraftmaschine, insbesondere an eine Verbrennungskraftmaschine eines Nutzfahrzeugs, bereitzustellen.

Diese Aufgaben werden durch eine Hybridantriebsanordnung für ein Fahrzeug mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Erfindungsgemäß wird eine Hybridantriebsanordnung für ein Fahrzeug, insbesondere für ein Nutzfahrzeug, bereitgestellt, umfassend eine Verbrennungskraftmaschine, nachfolgend auch als Verbrennungsmotor bezeichnet, die einen Nebenabtrieb zum Antrieb eines Nebenaggre-gats aufweist. Die Hybridantriebsanordnung umfasst ferner eine sowohl motorisch als auch generatorisch betreibbare elektrische Maschine, die mit dem Nebenabtrieb bewegungskoppelbar ist und/oder bewegungsgekoppelt ist. Gemäß allgemeinen Gesichtspunkten der Erfindung wird somit ein Nebenabtrieb am Verbrennungsmotor, z. B. ein Nebenabtriebsflansch, zur Ankopplung der elektrischen Maschine genutzt.

Hierbei ist festzustellen, dass Verbrennungsmotoren, insbesondere Verbrennungsmotoren von Nutzfahrzeugen, häufig eine oder mehrere Nebenabtriebe, d. h. Möglichkeiten für den Anbau von Nebenaggregaten, aufweisen. Es können dort Verbraucher wie Pumpen, Kompressoren oder ähnliche Nebenaggregate angeschlossen werden, die dann vom Verbrennungsmotor angetrieben werden. Insbesondere im Nutzfahrzeugbereich sind für bestimmte Anwendungen entsprechende Anbauten bzw. Abtriebe bereits vorgesehen, wie z. B. bei Klimakompressoren bei Busmotoren oder Kühlfahrzeugen oder großen Generatoren zum Betrieb von Verbrauchern im Lastkraftwagen-Aufbau. Diese Nebenabtriebe können vorteilhafterweise anstatt für den Anbau eines entsprechenden Nebenaggregats für den Anbau der elektrischen Maschine (nachfolgend auch kurz als E-Maschine bezeichnet) kostengünstig verwendet werden. Durch Anordnung und Ankopplung einer motorisch als auch generatorisch betreibbaren elektrischen Maschine an einem Nebenabtrieb der Verbrennungskraftmaschine wird die Nebenabtriebsmöglichkeit somit nicht nur zur Leistungsabnahme, sondern auch zur Leistungszuführung genutzt.

Ein besonderer Vorzug der Erfindung liegt somit darin, dass durch die erfindungsgemäße Anbindung der E-Maschine an einen vorhandenen Nebenabtrieb bzw. eine Nebenabtriebsschnittstelle der Verbrennungskraftmaschine die vorhandene Motor-Getriebe-Struktur und deren Lagerung im Fahrzeug nicht geändert werden müssen. Folgeänderungen und deren Qualifikation sind nicht oder nur in deutlich geringerem Umfang im Vergleich zu einer herkömmlichen Anordnung der E-Maschine direkt am Getriebe erforderlich. Ferner wird die Motor-Getriebe-Einheit nicht verlängert, da die E-Maschine nicht zwischen Motor und Getriebe, sondern seitlich oder ober- oder unterhalb der Motor-Getriebeeinheit angeordnet werden kann und die Wirkverbindung zur Kurbelwelle über den bereits vorhandenen Abtrieb hergestellt wird.

Ein weiterer Vorteil der Verwendung einer existierenden Abtriebsschnittstelle zur Ankopplung der elektrischen Maschine ist, dass der Anbau der elektrischen Maschine am Motor erfolgt und der Anbau somit unabhängig vom verwendeten Getriebe des Antriebsstrangs ist. Ein weiterer besonderer Vorteil der Erfindung liegt somit auch darin, dass die erfindungsgemäße Anordnung der elektrischen Maschine eine Nachrüstung bestehender Fahrzeuge ermöglicht. Durch die Anordnung der elektrischen Maschine an einem Nebenabtrieb wird somit eine sogenannte Mildhybrid-Antriebsanordnung bereitgestellt, in der die elektrische Maschine im Motorbetrieb den Verbrennungsmotor zur Leistungssteigerung und zur Verbrauchsreduzierung unterstützt. Bremsenergie kann im Generatorbetrieb der elektrischen Maschine teilweise wiedergewonnen werden. Ein rein elektromotorischer Fahrbetrieb wie bei einem Vollhybrid-Fahrzeug ist nicht möglich.

Gemäß einer Ausführungsvariante kann die Hybridantriebsanordnung eine Kupplung aufweisen, über die die elektrische Maschine mit dem Nebenabtrieb koppelbar ist, so dass die elektrische Maschine bei Bedarf zugeschaltet werden kann und nicht ununterbrochen in Wirkverbindung mit der Kurbelwelle steht.

Gemäß einer bevorzugten Ausgestaltungsform ist der Nebenabtrieb ein Rädertrieb der Verbrennungskraftmaschine, der auch als Steuertrieb bezeichnet wird, so dass die elektrische Maschine mit dem Rädertrieb bewegungskoppelbar und/oder bewegungsgekoppelt ist.

Der Rädertrieb ist eine Zahnradanordnung, die mit der Kurbelwelle und einer Nockenwelle kämmt. Der Rädertrieb ist vorzugsweise ausgeführt, wenigstens ein weiteres Nebenaggregat anzutreiben, falls dieses an den Rädertrieb angekoppelt wird. Hierzu kann eine Abtriebsschnittstelle am Gehäuse des Verbrennungsmotors, z. B. am Kurbelgehäuse oder Schwungradgehäuse, vorgesehen sein, über die ein Nebenaggregat oder gemäß der Erfindung die elektrische Maschine befestigbar ist, derart, dass eine Wirkverbindung mit dem Rädertrieb hergestellt wird. Erfindungsgemäß wird somit die Möglichkeit zum Antrieb eines Nebenaggregats stattdessen zur Anbindung der elektrischen Maschine für den Hybridantrieb genutzt, so dass über den Nebenabtrieb nicht nur Leistung entnommen, sondern auch wieder elektrische Leistung in den Antriebsstrang, insbesondere auf die Kurbelwelle, induziert werden kann.

Der Rädertrieb kann hierbei auf der dem Getriebe zugewandten Seite der Verbrennungskraftmaschine angeordnet sein, vorzugsweise im Bereich des Schwungradgehäuses oder im Bereich zwischen dem Kurbelgehäuse und dem Schwungradgehäuse. Das Schwungradgehäuse umhaust das Schwungrad zumindest teilweise. Der Rädertrieb kann vom Schwungradgehäuse ebenfalls umhaust sein. Im Rahmen der Erfindung besteht jedoch auch die Möglichkeit, einen Rädertrieb zu nutzen, wenn dieser auf einer dem Getriebe abgewandten Seite der Verbrennungskraftmaschine angeordnet ist.

Neben der hervorgehobenen Anordnung der elektrischen Maschine an einem Rädertrieb bzw. Steuertrieb der Verbrennungskraftmaschine besteht jedoch im Rahmen der Erfindung auch die Möglichkeit, die elektrische Maschine auch an einem Riementrieb der Verbrennungskraftmaschine anzubinden, so dass die elektrische Maschine mit dem Riementrieb bewegungskoppelbar und/oder bewegungsgekoppelt ist.

Gemäß einem weiteren vorteilhaften Ausführungsbeispiel ist die Verbrennungskraftmaschine ein Dieselmotor eines Nutzfahrzeugs, wobei der Dieselmotor einen oberen Bereich des Kurbelgehäuses aufweist, der schmaler als ein unterer, eine Ölwanne umfassender Bereich des Kurbelgehäuses ist. Gemäß einer Variante dieses Ausführungsbeispiels kann sich die elektrische Maschine in Axialrichtung der Kurbelwelle entlang des oberen Bereichs und außerhalb des Kurbelgehäuses erstrecken. Diese Ausführungsvariante ermöglicht die Nutzung eines Rädertriebs, der im Bereich des Schwungradgehäuses angeordnet ist, und bietet den Vorteil, dass der schmale oder verjüngende Bereich des Motorgehäuses genutzt werden kann, um die elektrische Maschine platzsparend anzuordnen. Gemäß einer alternativen Variante dieses Ausführungsbeispiels erstreckt sich die elektrische Maschine abtriebsseitig in Axialrichtung der Kurbelwelle, derart, dass sich die elektrische Maschine zumindest teilweise über einem Getriebe des Fahrzeugs erstreckt. Gemäß dieser Variante erstreckt sich die elektrische Maschine somit weg von der Verbrennungskraftmaschine. Auch diese Variante ermöglicht die Nutzung eines Rädertriebs, der im Bereich des Schwungradgehäuses angeordnet ist.

Ferner besteht im Rahmen der Erfindung die Möglichkeit, dass die elektrische Maschine durch ein Adapterelement, welches auf einem Wellenstumpf der elektrischen Maschine drehfest angeordnet ist, in einem an einer Gehäuseöffnung der Verbrennungskraftmaschine vorgesehenen Abtriebsflansch gehaltert ist, so dass das Adapterelement mit dem Rädertrieb bewegungsgekoppelt ist. Der Abtriebsflansch bildet die Abtriebsschnittstelle. Das Adapterelement kann ein Zahnrad sein, das mit dem Rädertrieb unmittelbar kämmt oder alternativ über eine zusätzliche Kupplung in Eingriff oder außer Eingriff mit dem Rädertrieb gebracht werden kann. Die vorstehend erwähnte Gehäuseöffnung kann am Schwungradgehäuse vorgesehen sein. Ein besonderer Vorzug dieser Ausführungsvariante liegt somit darin, dass eine vorhandene, insbesondere bei Nutzfahrzeugverbrennungsmotoren an sich bekannte, Nebenabtriebsschnittstelle genutzt werden kann.

Gemäß einem weiteren Aspekt der Erfindung kann die Hybridantriebsanordnung einen elektrischen Energiespeicher aufweisen, der mit der elektrischen Maschine verbunden ist, um die elektrische Maschine mit elektrischer Energie zu versorgen. Ferner kann die Hybridantriebsanordnung ausgeführt sein, in einem Rekuperationsbetrieb bzw. Schubbetrieb Leistungsüberschüsse durch einen generatorischen Betrieb der elektrischen Maschine aufzunehmen und in dem elektrischen Energiespeicher zu speichern. Ferner kann bei einem zusätzlichen Leistungsbedarf im elektrischen Energiespeicher gespeicherte Energie über die elektrische Maschine einer Kurbelwelle in Form eines erhöhten Drehmoments zugeführt werden, um die Verbrennungskraftmaschine zu unterstützen.

Die Erfindung betrifft ferner ein Kraftfahrzeug, vorzugsweise ein Nutzfahrzeug, mit einer Hybridantriebsanordnung wie hierin offenbart.

Weitere Einzelheiten und Vorteile der Erfindung werden im Folgenden unter Bezug auf die beigefügten Zeichnungen beschrieben. Es zeigen:
- Figur 1: eine schematische Seitenansicht einer Hybridantriebsanordnung gemäß einer ersten Ausgestaltungsform der Erfindung;
- Figur 2: eine schematische Seitenansicht einer Hybridantriebsanordnung gemäß einer zweiten Ausgestaltungsform der Erfindung;
- Figur 3: eine schematische Ansicht auf den Rädertrieb ohne Schwungradgehäuse;
- Figur 4: eine Detailseitenansicht ohne Getriebe gemäß der ersten Ausgestaltungsform; und
- Figur 5: eine schematische Detailseitenansicht ohne Getriebe gemäß der zweiten Ausgestaltungsform.

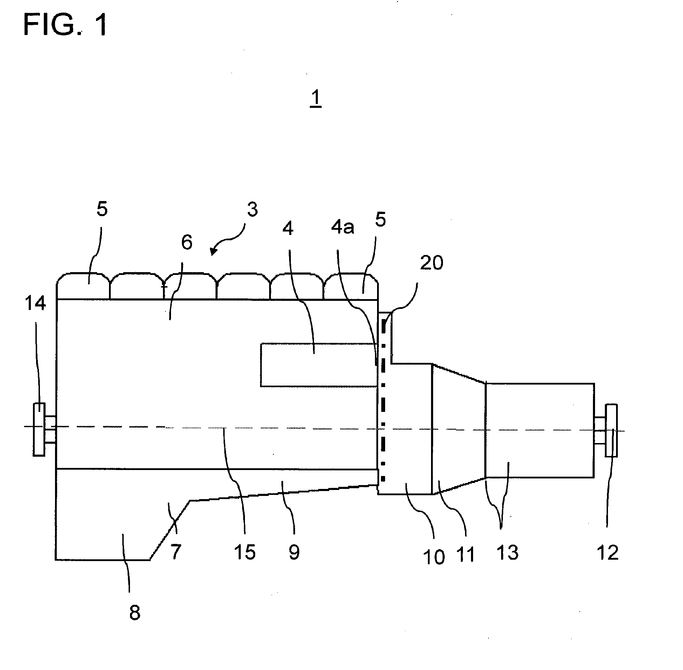

Figur 1 zeigt eine stark schematisierte Seitenansicht einer Hybridantriebsanordnung 1 gemäß einer ersten Ausführungsform der Erfindung. Gleiche oder funktional äquivalente Elemente sind in allen Figuren mit denselben Bezugszeichen bezeichnet.

Die Hybridantriebsanordnung 1 umfasst einen Dieselmotor 3 eines Nutzfahrzeugs. In Figur 1 sind die sechs Zylinderköpfe 5 im oberen Bereich des Dieselmotors 3 zu erkennen. Die Zylinder des Dieselmotors 3 und die Kurbelwelle 15, die durch die gestrichelte Linie 15 schematisch dargestellt ist, die die Mittellinie der Kurbelwelle oder des Kurbeltriebs kennzeichnet, sind von einem Kurbelgehäuse 6 umgeben, das im unteren Bereich mit einer Ölwanne 7 abgeschlossen ist. Die Ölwanne 7 besteht in an sich bekannter Weise aus einem flacheren Teil 9 und einem tieferen Teil 8, in dem sich das Öl sammelt und in dem eine Ölpumpe (nicht gezeigt) angeordnet ist.

An das Kurbelgehäuse 6 schließt sich abtriebsseitig ein Schwungradgehäuse 11 an, an das sich wiederum das Getriebe 13 anschließt. Figur 1 zeigt ferner die Kupplungsglocke 11 als ein Teil des Getriebes 13. Auf der dem Getriebe 13 abgewandten Seite des Dieselmotors 3 ragt aus dem Kurbelgehäuse 6 ein Kurbelwellenstumpf 14 hervor, an dem der Riementrieb des Dieselmotors 3 angeordnet ist (in Figur 1 nicht dargestellt). Ferner ist abtriebsseitig vom Getriebe ein weiterer Kurbelwellenstumpf 12 vorgesehen.

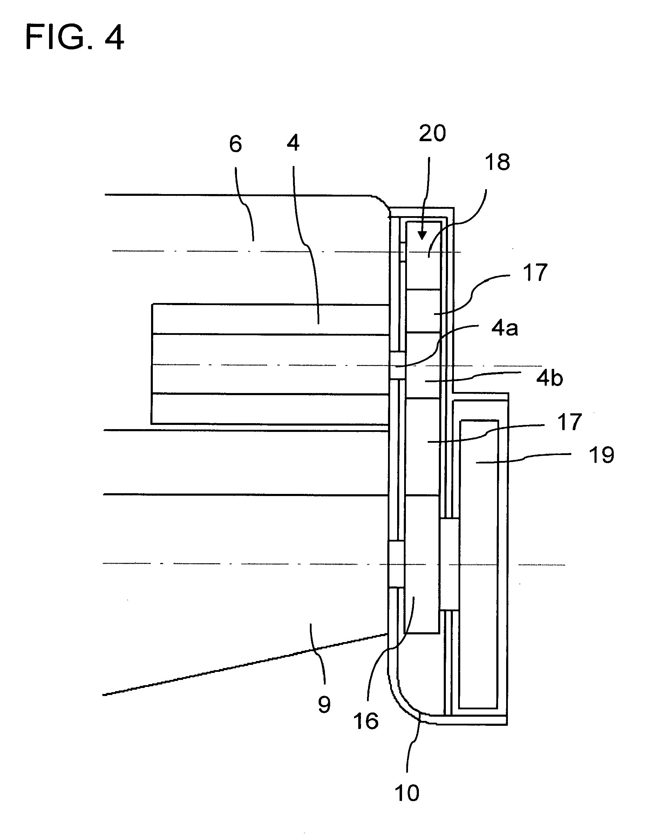

Das Schwungradgehäuse 11 umhaust in an sich bekannter Weise ein Schwungrad 19, was in der Darstellung der Figur 4 zu erkennen ist. Ferner ist im Bereich zwischen dem Kurbelgehäuse 6 und dem Schwungrad 10 ein Rädertrieb 20 vorgesehen, der ebenfalls von einem Gehäuse, z. B. dem Schwungradgehäuse 10, umhaust ist.

Der Rädertrieb 20 ist eine Zahnradanordnung, was anhand der nachfolgenden Figuren noch detaillierter erläutert wird, die mit der Kurbelwelle 15 und einer Nockenwelle kämmt und die ausgeführt ist, wenigstens ein weiteres Nebenaggregat anzutreiben, falls ein solches an den Rädertrieb angeschlossen wird.

Im Bereich des Rädertriebs 20 weist das Schwungradgehäuse 10 an der mit dem Bezugszeichen 4a gekennzeichneten Stelle einen Abtriebsflansch auf. Hierzu weist das Gehäuse an dieser Stelle eine mit einem Deckel verschließbare Gehäuseöffnung auf. Erfindungsgemäß wird dieser Abtriebsflansch, der eine Abtriebsschnittstelle ausbildet, zur Kopplung mit einer elektrischen Maschine 4 genutzt, die in den Abtriebsflansch eingeschraubt wird. Zur Herstellung einer Wirkverbindung zwischen der elektrischen Maschine und dem Rädertrieb 20 kämmt ein Zahnrad 4b, das auf einem Wellenstumpf der elektrischen Maschine 4 angeordnet ist (siehe auch Figur 4), mit dem Rädertrieb 20.

Die elektrische Maschine 4 erstreckt sich gemäß dem in den Figuren 1 und 4 dargestellten Ausführungsbeispiel in Axialrichtung der Kurbelwelle 15 entlang des oberen schmalen Bereichs 6a des Kurbelgehäuses 6 und außerhalb des Kurbelgehäuses 6.

Es wird nochmals festgestellt, dass die in Figur 1 gezeigte Antriebsanordnung mit Ausnahme der an einem Abtrieb des Dieselmotors 3 angeschlossenen elektrischen Maschine 4 bereits aus dem Stand der Technik bekannt ist und hier nicht detaillierter beschrieben werden muss. Erfindungsgemäß wird die Abtriebsschnittstelle im Bereich 4a jedoch nicht zur Anbringung eines Nebenaggregats genutzt, sondern zur Anbringung einer sowohl motorisch als auch generatorisch betreibbaren elektrischen Maschine 4, so dass die Abtriebsschnittstelle nicht nur zur Leistungsabnahme, sondern auch zur Leistungszuführung genutzt werden kann. Dadurch kann ohne größere konstruktive Änderungen ein bestehender Verbrennungsmotor, der einen Nebenabtrieb aufweist, zu einem Hybridantrieb erweitert werden.

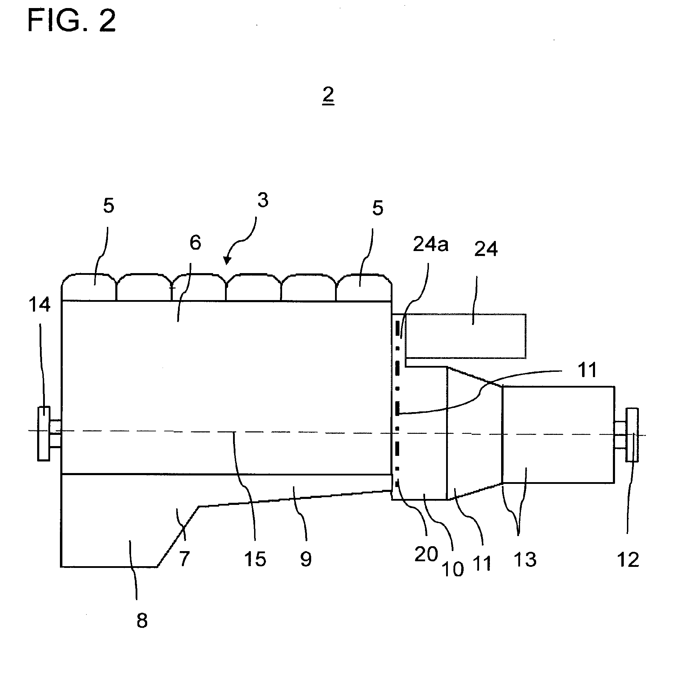

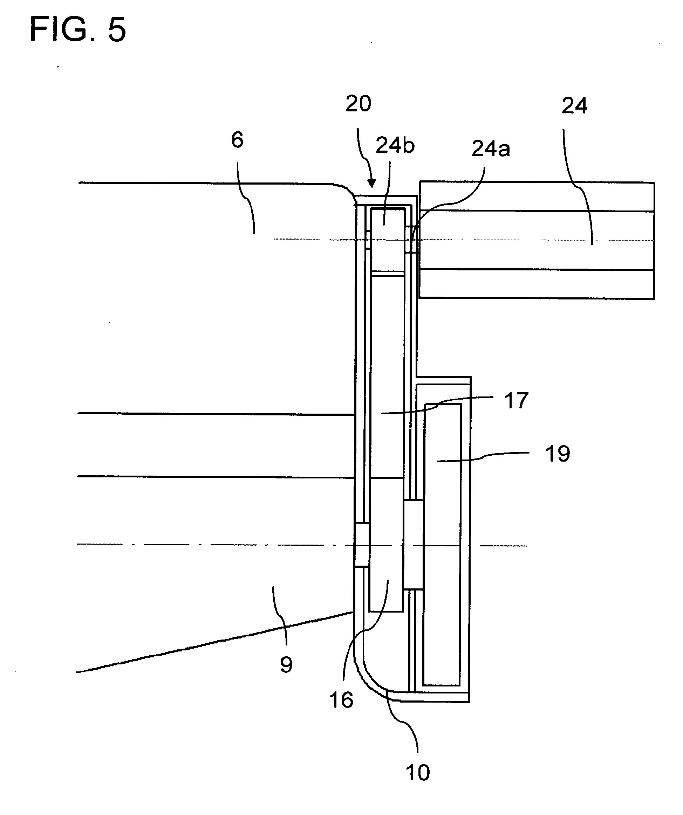

Die Figuren 2 und 5 zeigen in einer schematischen Seitenansicht eine weitere Ausführungsform der Erfindung. Die Besonderheit dieser Ausführungsform liegt darin, dass die elektrische Maschine 24 an einem anderen Anbauort 24a, an dem eine weitere Abtriebsschnittstelle des Motors 3 vorgesehen ist, mit dem Rädertrieb 20 in Wirkverbindung steht. An der Stelle 24a ist wiederum im oberen Bereich des Schwungradgehäuses 10 an der dem Getriebe 13 zugewandten Seite des Schwungradgehäuses 10 ein Abtriebsflansch vorgesehen, mit dem die elektrische Maschine 24 verschraubt ist. Am Abtriebsflansch kämmt wiederum ein auf dem Wellenstumpf der elektrischen Maschine 4 drehfest angeordnetes Zahnrad mit einem Zahnrad des Rädertriebes 20.

Gemäß dieser Ausführungsvariante erstreckt sich die elektrische Maschine 24 abtriebsseitig in Axialrichtung der Kurbelwelle 15, derart, dass sich die elektrische Maschine 24 zumindest teilweise über dem Getriebe 13 des Fahrzeugs erstreckt. Ferner ist die elektrische Maschine 24 auf Höhe des oberen Bereichs 6a des Kurbelgehäuses 6 angeordnet und erstreckt sich vom Dieselmotor 3 weg.

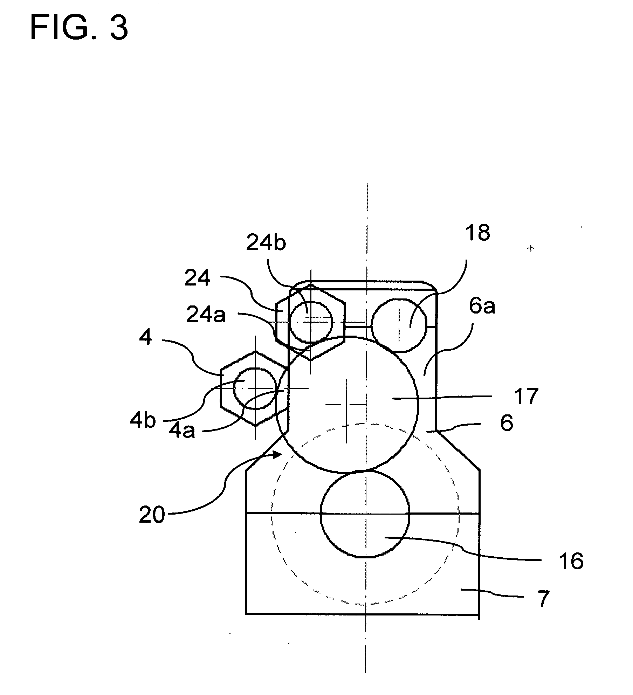

Figur 3 illustriert die Anbringung der elektrischen Maschine nochmals in einer Ansicht auf den Rädertrieb ohne Schwungradgehäuse. Hierbei sind zur Vereinfachungen der Beschreibung beide zuvor beschriebene Ausführungsvarianten mit den elektrischen Maschinen 4 und 24 gleichzeitig eingezeichnet, wobei gemäß jeder Ausführungsvariante nur entweder die elektrische Maschine 4 oder die elektrische Maschine 24 an den eingezeichneten Stellen mit dem Rädertrieb 20 verbunden ist (vgl. Figuren 1 und 4 vs. Figuren 2 und 5).

Der Rädertrieb 20 besteht aus einer Zahnradanordnung mit einem an der Kurbelwelle angeordneten Zahnrad 16, das mit einem Zwischenrad 17 kämmt, welches wiederum mit dem Nockenwellenantriebsrad 18 kämmt. Zur Anbindung der elektrischen Maschine an den durch diese Zahnradanordnung gebildeten Rädertrieb 20 kämmt im angekoppelten Zustand der elektrischen Maschine ein auf einem Wellenstumpf der elektrischen Maschine drehfest angeordnetes Zahnrad 4b bzw. 24b mit dem Zwischenrad 17 und ist in diesem Zustand mit dem Rädertrieb 20 bewegungsgekoppelt.

In Figur 3 ist ferner der obere engere Abschnitt 6a des Kurbelgehäuses 6 zu erkennen. Wie vorstehend bereits erwähnt, ist die elektrische Maschine 4 gemäß der ersten Ausführungsform seitlich vom Kurbelwellengehäuse 6 im oberen Bereich 6a des Kurbelwellengehäuses 6 angeordnet. Die elektrische Maschine 24 gemäß der zweiten Ausführungsform ist ebenfalls im engeren Bereich 6a des Kurbelwellengehäuses 6 angeordnet, jedoch nicht seitlich, sondern sich getriebeseitig von dem Kurbelwellengehäuse 6 wegerstreckend.

In Figur 4 ist ein Detailausschnitt in Seitenansicht ohne Getriebe der ersten Ausgestaltungsform gezeigt. In Figur 4 ist schematisch dargestellt, dass die elektrische Maschine 4 an der Abtriebsschnittstelle 4a über ein Antriebsrad 4b des Hybridmoduls mit dem Rädertrieb 20, insbesondere dem Zwischenrad 17 des Rädertriebs 20 kämmt. Ferner ist in Figur 4 das vom Schwungradgehäuse 10 umhauste Schwungrad 19 dargestellt. In Figur 4 bezeichnet das Bezugszeichen 4a ferner den Wellenstumpf der elektrischen Maschine 4, auf der das Antriebszahnrad 4b drehfest angeordnet ist.

Figur 5 zeigt eine Detailansicht in Seitenansicht ohne Getriebe der zweiten Ausgestaltungsform. Hierbei ist zu erkennen, dass die elektrische Maschine 24 an der Antriebsschnittstelle 24a ebenfalls über ein Antriebsrad 17 des Hybridmoduls mit dem Rädertrieb 20 kämmt. In Figur 5 bezeichnet das Bezugszeichen 24a ferner den Wellenstumpf der elektrischen Maschine 24, auf der das Antriebszahnrad 24b drehfest angeordnet ist. In Figur 5 wird das Nockenwellenzahnrad vom Antriebszahnrad 24b überdeckt und ist daher nicht zu sehen

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

### Bezugszeichenliste

- 1, 2: Hybridantriebsanordnung
- 3: Verbrennungskraftmaschine
- 4: Elektrische Maschine
- 4a: Abtriebsschnittstelle
- 4b: Antriebszahnrad
- 5: Zylinderkopf
- 6: Kurbelgehäuse
- 6a: Enger Abschnitt des Kurbelgehäuses
- 7: Ölwanne
- 8: Tiefer Teil der Ölwanne
- 9: Flacher Teil der Ölwanne
- 10: Schwungradgehäuse
- 11: Kupplungsglocke
- 12: Kurbelwellenstumpf
- 13: Getriebe
- 14: Kurbelwellenstumpf
- 15: Mittellinie der Kurbelwelle oder des Kurbeltriebs
- 16: Zahnrad an Kurbelwelle
- 17: Zwischenrad
- 18: Antriebsrad der Nockenwelle
- 19: Schwungrad
- 20: Rädertrieb
- 24: Elektrische Maschine
- 24a: Abtriebsschnittstelle
- 24b: Antriebszahnrad

## Patentansprüche

1. Hybridantriebsanordnung (1; 2) für ein Fahrzeug, insbesondere für ein Nutzfahrzeug, umfassend
eine Verbrennungskraftmaschine (3), aufweisend einen Nebenabtrieb (20) zum Antrieb eines Nebenaggregats; und
eine sowohl motorisch als auch generatorisch betreibbare elektrische Maschine (4; 24), die mit dem Nebenabtrieb (20) bewegungskoppelbar ist und/oder bewegungsgekoppelt ist.

2. Hybridantriebsanordnung (1; 2) nach Anspruch 1, **gekennzeichnet durch** eine Kupplung, über die die elektrische Maschine (4; 24) mit dem Nebenabtrieb koppelbar ist.

3. Hybridantriebsanordnung nach Anspruch 1 oder 2, **dadurch gekennzeichnet, dass** die elektrische Maschine (4; 24) mit einem Rädertrieb (20) der Verbrennungskraftmaschine bewegungskoppelbar ist und/oder bewegungsgekoppelt ist.

4. Hybridantriebsanordnung (1; 2) nach Anspruch 3, **dadurch gekennzeichnet, dass** der Rädertrieb (20) im Bereich des Schwungradgehäuses (11) angeordnet ist.

5. Hybridantriebsanordnung (1) nach Anspruch 3 oder 4, **dadurch gekennzeichnet, dass** die Verbrennungskraftmaschine (3) ein Dieselmotor eines Nutzfahrzeugs ist, aufweisend einen oberen Bereich (6a) des Kurbelgehäuses (6), der schmaler als ein unterer eine Ölwanne umfassenden Bereich (6b, 7) des Kurbelgehäuses (6) ist, wobei die elektrische Maschine (4) sich in Axialrichtung der Kurbelwelle (15) entlang des oberen Bereichs (6a) und außerhalb des Kurbelgehäuses (6) erstreckt.

6. Hybridantriebsanordnung (2) nach Anspruch 3 oder 4, **dadurch gekennzeichnet, dass** die Verbrennungskraftmaschine (3) ein Dieselmotor eines Nutzfahrzeugs ist, wobei die elektrische Maschine (24) sich abtriebsseitig in Axialrichtung der Kurbelwelle (15) erstreckt, derart, dass sich die elektrische Maschine (24) zumindest teilweise über einem Getriebe (13) des Fahrzeugs erstreckt.

7. Hybridantriebsanordnung (2) nach Anspruch 3, 4 oder 6, **dadurch gekennzeichnet, dass** der Dieselmotor einen oberen Bereich (6a) des Kurbelgehäuses (6), der schmaler als ein unterer eine Ölwanne umfassenden Bereich (6b, 7) des Kurbelgehäuses (6) ist, umfasst, wobei die elektrische Maschine (24) sich in Axialrichtung der Kurbelwelle (15) auf Höhe des oberen Bereichs abtriebsseitig von dem Dieselmotor wegerstreckt.

8. Hybridantriebsanordnung (1; 2) nach einem der vorhergehenden Ansprüche, **dadurch gekennzeichnet, dass** die elektrischen Maschine (4; 24) über ein auf einem Wellenstumpf der elektrischen Maschine drehfest angeordnetes erstes Zahnrad (4b; 24b) oder Adapterelement in einem an einer Gehäuseöffnung der Verbrennungskraftmaschine vorgesehenen Abtriebsflansch gehaltert ist, so dass das Zahnrad (4b; 24b) oder Adapterelement mit dem Rädertrieb (20) bewegungsgekoppelt ist.

9. Hybridantriebsanordnung (1; 2) nach einem der vorhergehenden Ansprüche, **gekennzeichnet durch** einen elektrischen Energiespeicher, der mit der elektrischen Maschine (2; 24) verbunden ist, um die elektrische Maschine (2; 24) mit elektrischer Energie zu versorgen.

10. Hybridantriebsanordnung (1; 2) nach Anspruch 9, **dadurch gekennzeichnet, dass** die Hybridantriebsanordnung ausgeführt ist,
(a) in einem Rekuperationsbetrieb Leistungsüberschüsse durch einen generatorischen Betrieb der elektrischen Maschine (2; 24) aufzunehmen und in dem elektrischen Energiespeicher zu speichern; und
(b) bei einem zusätzlichen Leistungsbedarf im elektrischen Energiespeicher gespeicherte Energie über die elektrische Maschine (2; 24) einer Kurbelwelle (15) in Form eines erhöhten Drehmoments zuzuführen, um die Verbrennungskraftmaschine (3) zu unterstützen.

11. Hybridantriebsanordnung nach einem der vorhergehenden Ansprüche, **dadurch gekennzeichnet, dass** der Rädertrieb (20) eine Zahnradanordnung (16, 17, 18) ist, die mit der Kurbelwelle (15) und einer Nockenwelle kämmt.

12. Kraftfahrzeug, vorzugsweise Nutzfahrzeug, mit einer Hybridantriebsanordnung (1; 2) nach einem der Ansprüche 1 bis 11.
